# EUROPEAN PATENT APPLICATION

(11) **EP 2 088 039 A1**
(43) Date of publication of application: **12.08.2009**
(21) Application number: 09151899.3
(22) Date of filing: 03.02.2009
(51) Int. Cl.: B60R 21/34

(54) **Airbag device**

(30) Priority: 06.02.2008 JP 2008026113; 16.12.2008 JP 2008319374
(71) Applicant: Takata Corporation, Tokyo 106-8510 (JP)
(72) Inventor: Kumagai, Masayoshi, Tokyo 106-8510 (JP); Nakamura, Atsushi, Tokyo 106-8510 (JP); Kobayashi, Yoshihiro, Tokyo 106-8510 (JP)
(74) Representative: Vossius & Partner

(57) **Abstract**

An airbag device 10 includes an airbag 20, an inflator 15 for jetting gas into the airbag 20, a pipe 16 for connecting the airbag 20 to the inflator 15, a detection unit for detecting a collision, a control unit for operating the inflator in accordance with a signal from the detection unit, and a cover 11 for storing the airbag 20, and expands the airbag 20 installed along a front pillar 2 outside a vehicle. The inflator 15 is installed in a vehicle interior. This airbag device has a small inflator which does not require high water-proof/thermal insulating property to improve assembly work and to stabilize expansion for appropriately and softly protecting a pedestrian (Fig. 15).

## Description

The present invention relates to a technical field of an airbag device which is deployed and expanded outside the vehicle by gas from the inflator in an emergency when a vehicle collides against a subject for the purpose of alleviating the impact exerted to the subject and the vehicle.

Hitherto, there has been disclosed the device for alleviating the impact exerted to a pedestrian resulting from the second collision against the vehicle subsequent to the first collision therebetween by expanding the airbag outside the pillar of the vehicle.

For example, there has been disclosed the pillar airbag device for absorbing and alleviating the impact exerted to the pedestrian resulting from the second collision against the front pillar of the vehicle having the inflator installed in the front pillar (see JP-A-7-108903 (Patent Document 1)).

The airbag device disclosed in Patent Document 1 has the inflator installed in a recess portion formed in the front surface of the front pillar at the side of the vehicle exterior. The aforementioned structure requires high water-proof/thermal insulating property, thus increasing the cost.

It is an object of the present invention to provide an airbag device including a small inflator which does not require high water-proof/thermal insulation property so as to be easily assembled and stably expanded to appropriately and softly protect the pedestrian.

According to Claim 1 of the present invention, an airbag device includes an airbag, an inflator for jetting gas into the airbag, a pipe for connecting the airbag to the inflator, a detection unit for detecting a collision, a control unit for operating the inflator in accordance with a signal from the detection unit, and a cover for storing the airbag, and expands the airbag installed along a front pillar outside a vehicle. The inflator is installed in a vehicle interior.

In Claim 2 of the present invention, the inflator is installed in the front pillar in the vehicle interior.

In Claim 3 of the present invention, the front pillar includes an inflator inlet which allows insertion of the inflator from outside the vehicle so that the inflator is installed in the front pillar in the vehicle interior.

In Claim 4 of the present invention, the inflator inlet having the pipe inserted is sealed with a water-proof member.

The airbag device according to the present invention includes an airbag, an inflator for jetting gas into the airbag, a pipe for connecting the airbag to the inflator, a detection unit for detecting a collision, a control unit for operating the inflator in accordance with a signal from the detection unit, and a cover for storing the airbag, and expands the airbag installed along a front pillar outside a vehicle. The inflator is installed in a vehicle interior. Although the airbag expands outside the vehicle, the inflator may be installed in the vehicle interior without requiring high water-proof/thermal insulating property. This makes it possible to improve the assembly work, for example, easy arrangement of the wiring path, and to suppress the cost.

The inflator is installed in the front pillar in the vehicle interior without requiring high water-proof/thermal insulating property. This makes it possible to improve the assembly work and to stably expand the airbag.

The front pillar includes an inflator inlet which allows insertion of the inflator from outside the vehicle so that the inflator is installed in the front pillar in the vehicle interior. This makes it possible to further improve the assembly work.

The inflator inlet having the pipe inserted is sealed with a water-proof member. This makes it possible to improve the water-proof/thermal insulating property with the simple structure.

The present invention will be further illustrated with examples below referring to the drawings:

Fig. 1 is a view showing an example of an airbag according to the present invention;
Fig. 2 is a perspective view of a vehicle having an airbag device of the example installed therein;
Fig. 3 is a perspective view showing an area around a front pillar of a vehicle of the example;
Fig. 4 is a sectional view taken along line a-a shown in Fig. 3;
Fig. 5 is a sectional view taken along line b-b shown in Fig. 3;
Fig. 6 is a view showing an area around the front pillar of the example seen from the vehicle interior;
Fig. 7 is a view showing a member for restricting bag expansion direction;
Fig. 8 is a view showing a portion of the front pillar seen from a windshield;
Fig. 9 is a perspective view showing an area around the front pillar having the cover, the airbag and the fender omitted;
Fig. 10 is a sectional view taken along line c-c shown in Fig. 7;
Fig. 11 shows the modularizing process;
Fig. 12 shows assembly of the module with the vehicle;
Fig. 13 shows the operation of the airbag device of the example;
Fig. 14 is a sectional view of the airbag device in operation;
Fig. 15 is a perspective view of an area around the front pillar in the final stage of expansion;
Fig. 16 is a sectional view taken along line d-d shown in Fig. 11;
Fig. 17 is a sectional view taken along line e-e shown in Fig. 11;
Fig. 18 is a perspective view showing the area around the front pillar while omitting the airbag in the final stage of expansion;
Fig. 19 is a perspective view of the vehicle having an airbag device as another example;
Fig. 20 is an enlarged sectional view showing an area around the inflator; and
Fig. 21 is a view showing a pipe joint structure.

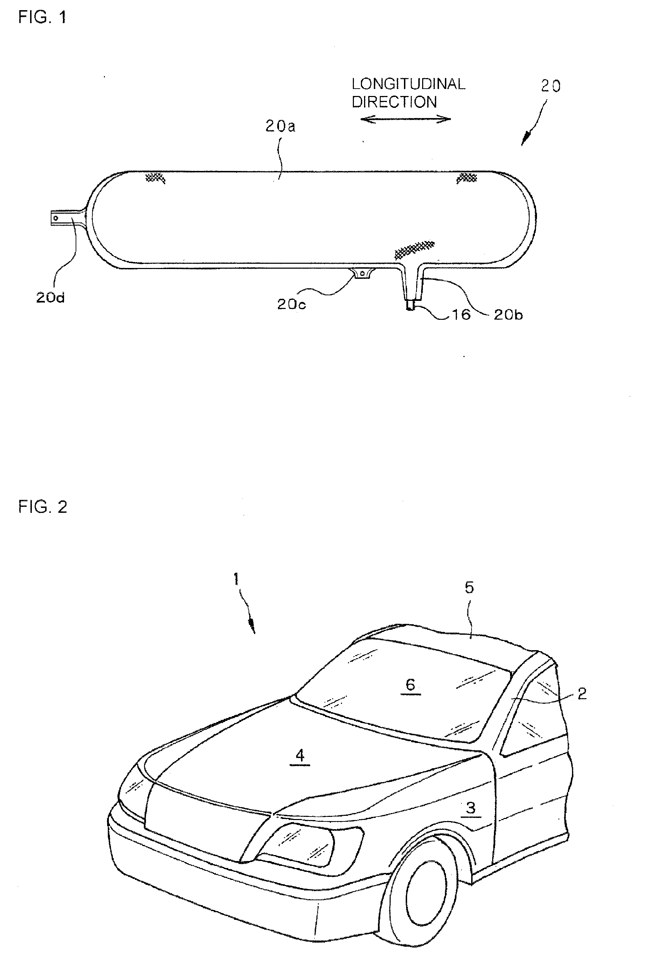

Fig. 1 shows an airbag 20 employed as an example. The airbag 20 of the example is formed by folding and sewing a single sheet of a base cloth, and includes an expansion portion 20a, a pipe joint portion 20b, a first engagement portion 20c and a second engagement portion 20d. The expansion portion 20a has substantially an oval shape, which is structured to expand for alleviating the impact caused by the collision against a subject such as a pedestrian. The pipe joint portion 20b protrudes in a direction perpendicular to a longitudinal direction of the expansion portion 20a, and is caulked having a pipe 16 inserted therethrough. The first engagement portion 20c protrudes from a portion around the pipe joint portion 20b in the direction perpendicular to the longitudinal direction of the expansion portion 20a for engaging the airbag 20 with the vehicle body. The second engagement portion 20d is formed at one end of the expansion portion 20a of the airbag 20 for engaging the airbag 20 with the vehicle body.

A state having an airbag device 10 including the airbag 20 mounted in a vehicle 1 will be described.

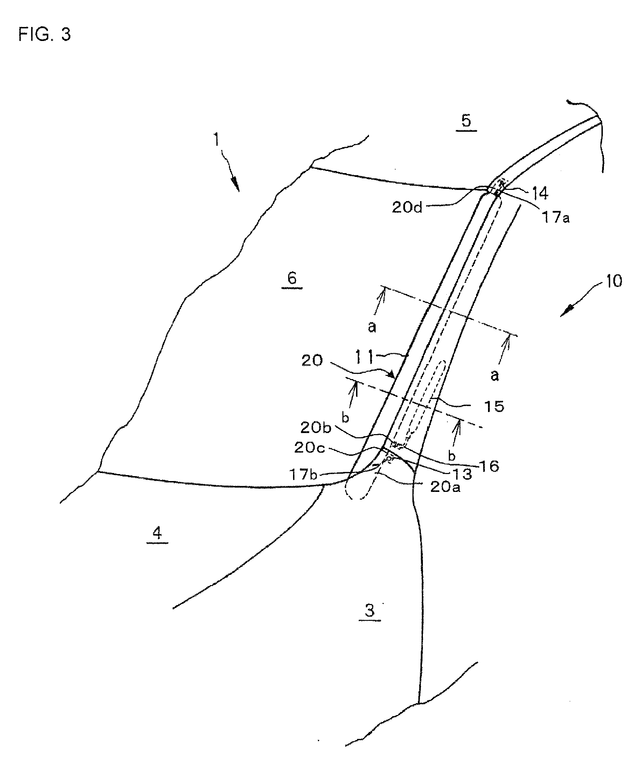

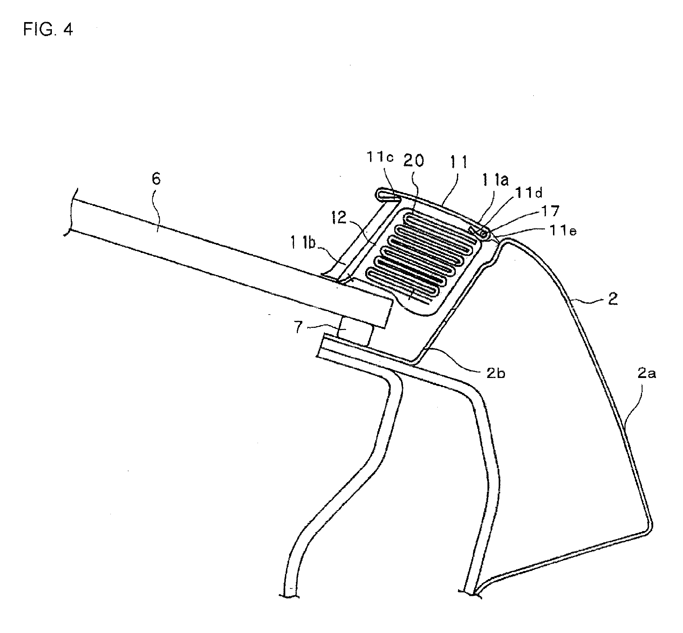

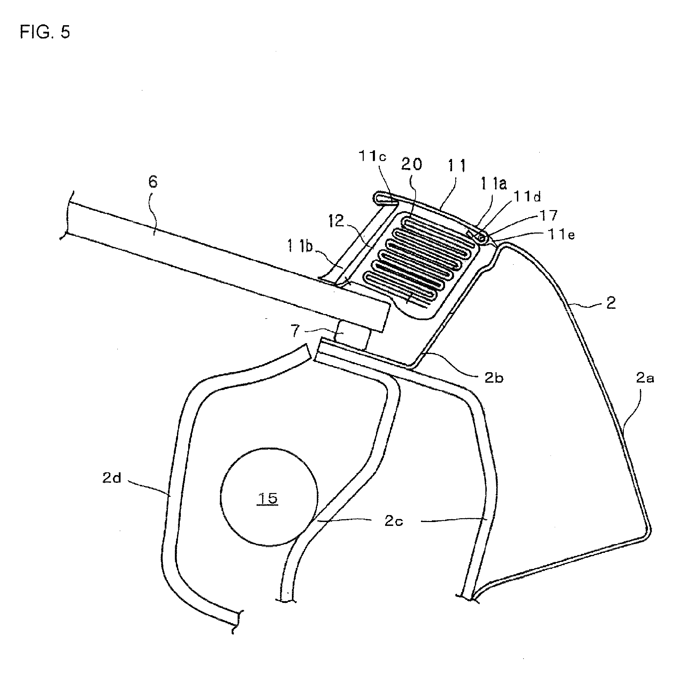

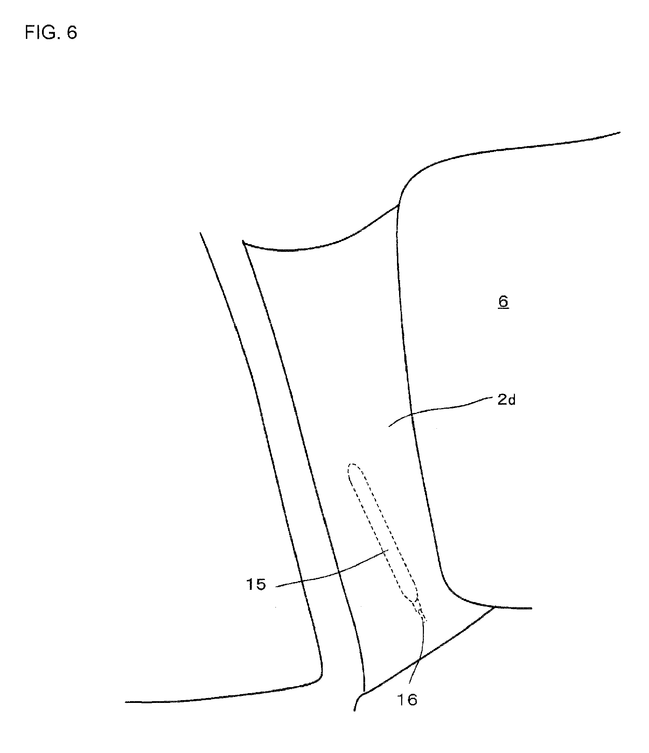

Fig. 2 is a perspective view of the vehicle having the airbag device according to the example mounted therein. Fig. 3 is a perspective view of an area around a front pillar of the vehicle according to the example. Fig. 4 is a sectional view taken along line a-a shown in Fig. 3. Fig. 5 is a sectional view taken along line b-b shown in Fig. 3. Fig. 6 is a perspective view of an area around the front pillar according to the example seen from the vehicle interior.

Referring to the drawings, a reference numeral 1 denotes a vehicle, 2 denotes a front pillar as an example of a framework inside the vehicle, 3 denotes a fender, 4 denotes a hood, 5 denotes a roof, 6 denotes a windshield, 7 denotes a sealing, 10 denotes the airbag device, 11 denotes a cover, 12 denotes a bag case, 13 and 14 denote anchors, 15 denotes an inflator, 16 denotes a pipe, and 20 denotes the airbag.

The vehicle 1 includes the front pillar 2 which connects a member or an engine room frame (not shown) to the roof 5, and the windshield 6 installed via the sealing 7 while being enclosed by the hood 4, the roof 5 and the front pillar 2.

The airbag device 10 is stored in the front pillar 2 around the windshield 6 and the fender 3. The front pillar 2 includes a first surface 2a directed outside the vehicle 1 and a second surface 2b directed to the windshield. The airbag 20 is folded to the side of the second surface 2b of the front pillar 2 to be kept in the bag case 12 so as to be stored in the cover 11.

The cover 11 is formed of a member with a substantially L-like cross-section, which includes an upper cover 11a and a side cover 11b at the side of the windshield 6, and disposed to cover the airbag 20 folded at the side of the second surface 2b of the front pillar 2. The folded airbag 20 may be directly stored in the cover 11 without being kept in the bag case 12.

The cover 11 includes a first turnback portion 11c at the side of the windshield 6, and a second turnback portion 11d at the side of the front pillar 2. A cover retaining member 17 such as a strap is inserted into the second turnback portion 11d which is crushed for calking at several portions so as not to deteriorate the design surface. One end portion 17a of the cover retaining member 17 is engaged with the anchor 14, and the other end portion 17b is engaged with the proximal portion of the front pillar 2 or the vehicle body such as the member using the anchor 13 or a member 22 for restricting bag expanding direction.

A seal 11e is attached to the area of the upper cover 11a around the second turnback portion 11d to cover the gap between the front pillar 2 and the cover 11 to improve the design.

The front pillar 2 stores a long inflator 15 which generates gas for expanding the airbag 20, and a pipe 16 which supplies the gas generated by the inflator 15 to the airbag 20.

Referring to Fig. 5, the inflator 15 is directly fixed to a rigid portion 2c of the front pillar 2 or indirectly fixed thereto via the bracket inside the vehicle. The portion of the front pillar 2 in the vehicle interior is provided with a pillar garnish 2d for covering the inflator 15 so as not to be seen from the vehicle interior as shown in Fig. 6.

The inflator 15 may be installed inside the vehicle while designing the airbag 20 to expand outside the vehicle. Accordingly high water-proof/thermal insulating property with respect to an initiator (not shown) of the inflator 15 is not required. This makes it possible to improve the assembly work, for example, easy arrangement of the wiring path.

Preferably, the airbag 20, the inflator 15, the pipe 16 and the cover 11 are modularized.

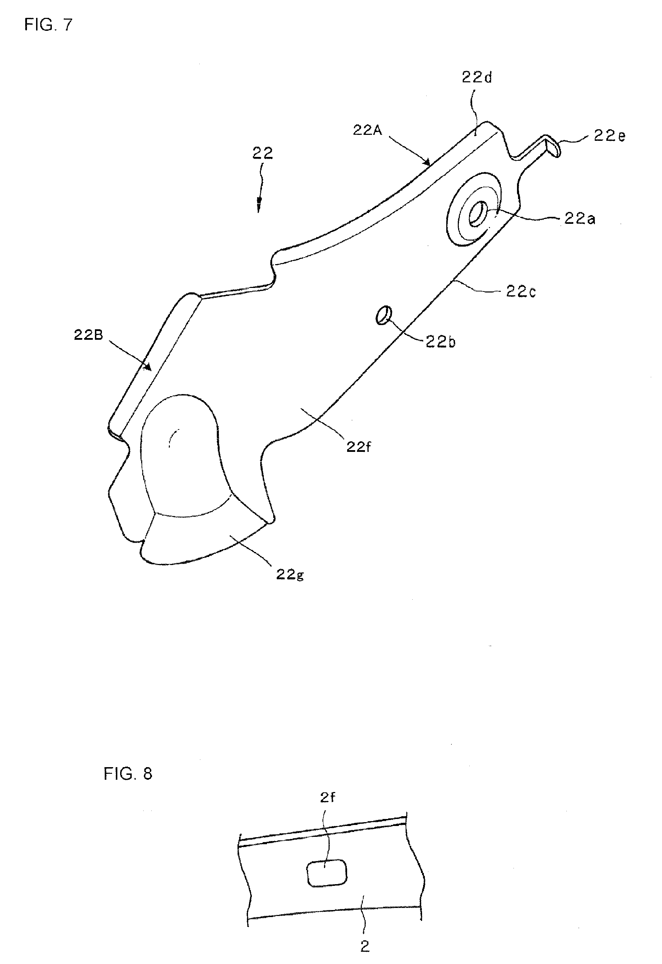

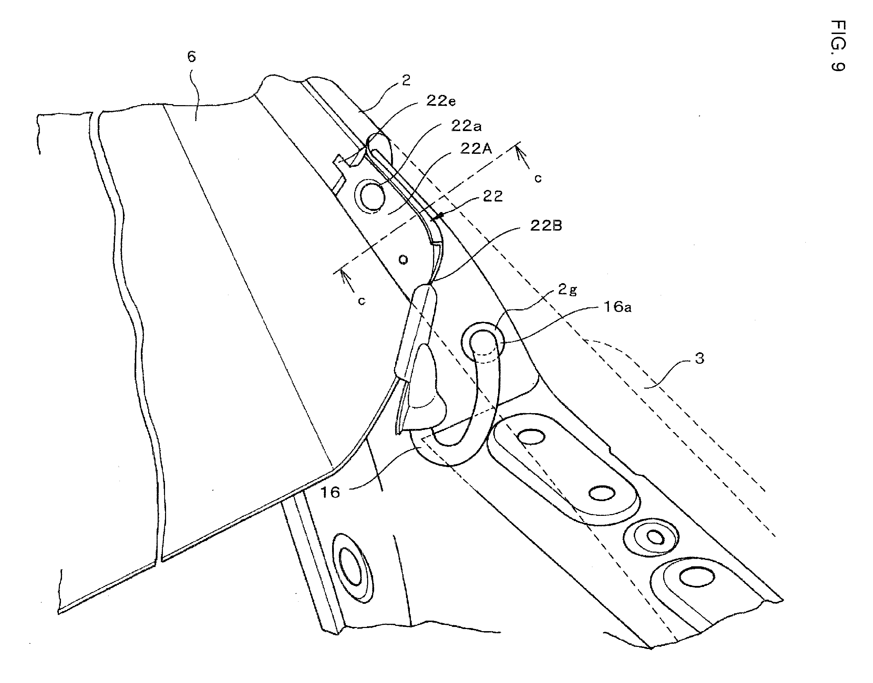

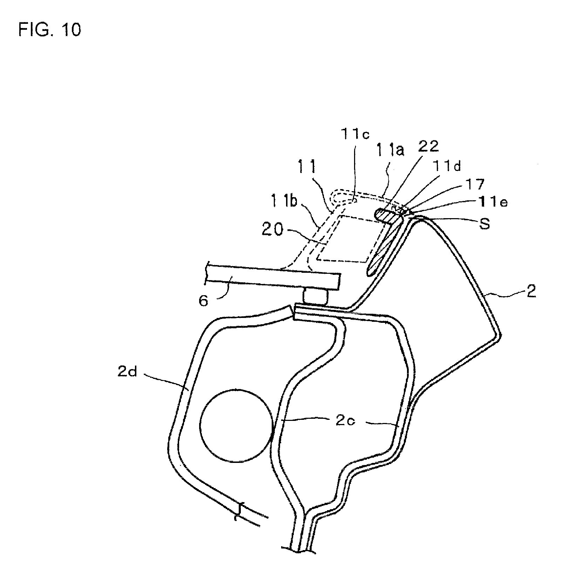

Fig. 7 is a view showing the member 22 for restricting bag expanding direction. Fig. 8 shows a portion of the front pillar 2 seen from the windshield 6. Fig. 9 is a perspective view of the area around the front pillar 2 having the airbag 20 and the fender 3 omitted. Fig. 10 is a sectional view taken along line c-c shown in Fig. 9.

Referring to Fig. 7, the member 22 for restricting bag expanding direction includes a fixing portion 22A formed of a plate member with an L-like cross-section and a cover member 22B which covers the gap between the fender 3 and the windshield 6. The fixing portion 22A includes a vehicle body fixing portion 22a fixed to the vehicle 1 with a screw and the like, a bag fixing portion 22b which fixes the airbag 20, a side wall guide portion 22c which stands in a substantially perpendicular direction with respect to the windshield 6, and an extending portion 22d which extends from the end portion of the side wall guide portion 22c in substantially parallel with the upper cover 11a. The side wall guide portion 22c includes a hook portion 22e engaged with an engagement hole 2f formed in the front pillar 2 as shown in Fig. 8. The cover portion 22B includes a communication portion 22f having a gentle curve surface along the front pillar 2f so as to be communicated with the fixing portion 22A, and a curve portion 22g which allows passage of the pipe 16.

Referring to Figs. 9 and 10, the member 22 for restricting bag expanding direction is attached to the vehicle 1. The member 22 for restricting bag expanding direction engages the hook portion 22e shown in Fig. 7 with the engagement hole 2f of the front pillar 2 shown in Fig. 8, and fixes the vehicle body fixing portion 22a to the vehicle 1 with the screw. At this time, the fixing portion 22A is tightly fixed so as to be fit along the front pillar 2. The cover member 22B covers the gap between the fender 3 and the windshield 6 so as to prevent the airbag 20 from being slipped below the fender 3, and to guide the pipe 16 with the curve portion 22g.

A reference numeral 2g in the drawing denotes an inflator inlet which is formed in the proximal end of the front pillar 2 through which the inflator 15 is installed to connect between inside and outside the vehicle. After the inflator 15 is inserted, it is sealed with a water-proof member 16a such as a packing with a high water-tightness while having the pipe 16 inserted therethrough.

After the member 22 for restricting bag expanding direction is installed in the vehicle 1, the airbag device 10 is fixed, and the cover 11 is closed as shown in Fig. 10.

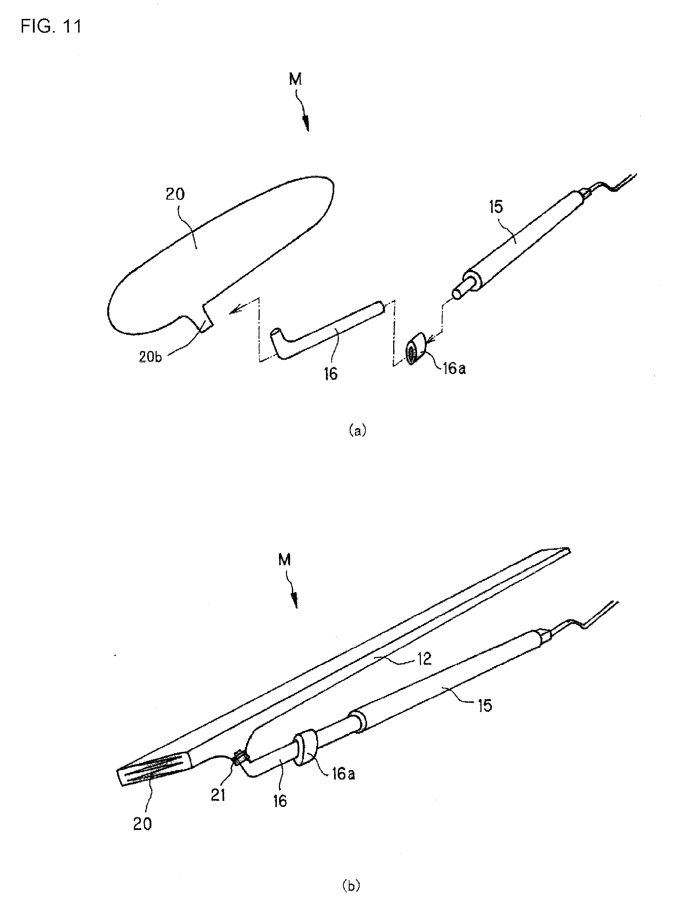

As shown in Fig. 11, the inflator 15 and the pipe 16 are attached to the airbag 20. Referring to Fig. 11(a), the water-proof member 16a is attached to the pipe 16. The water-proof member 16a formed as an annular member is attached to the outer circumference of the pipe 16 to seal the inflator inlet 2g as shown in Fig. 9. Then the inflator 15 is connected to the pipe 16 and calked. The pipe 16 is inserted into the pipe joint portion 20b of the airbag 20 and calked with a band 21. As a result, an airbag module M formed by assembling the airbag 20, the bag case 12, the inflator 15 and the pipe 16 is obtained as shown in Fig. 11(b). The airbag module M may be structured to include the cover 11.

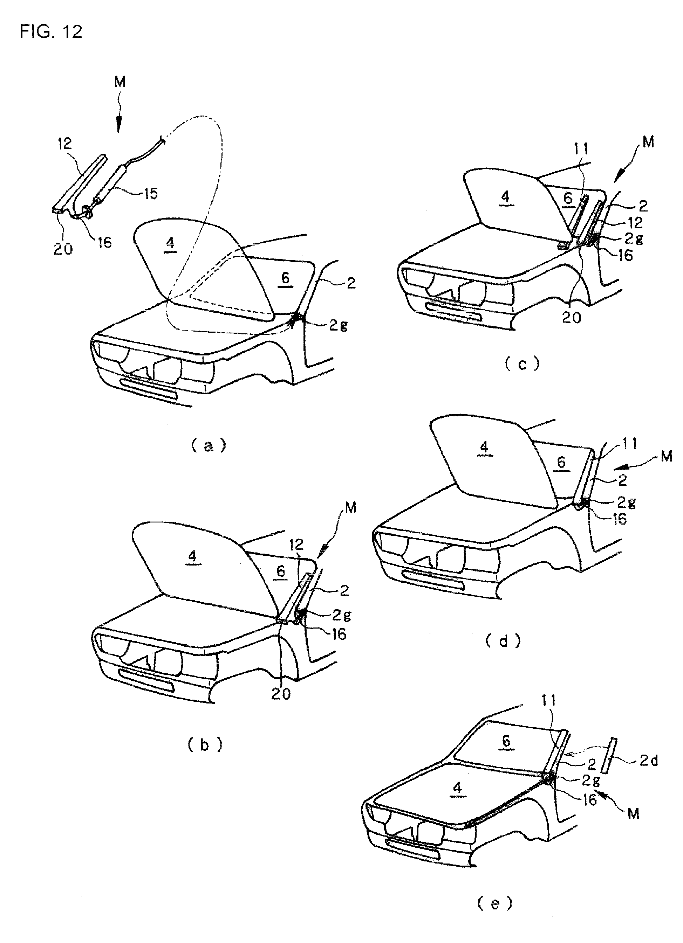

As shown Fig. 12, the airbag module M is assembled with the vehicle. Referring to Fig. 12(a), the airbag module M is assembled with the vehicle having no engine onboard. The operator is supposed to work having the engine room opened under the hood 4.

The operator inserts the inflator 15 and the pipe 16 of the airbag module M through the inflator inlet 2g of the front pillar 2 to the vehicle interior so as to be attached to the rigid portion 2c of the front pillar 2 as shown in Fig. 5, and then inserts the airbag 20 and the bag case 12 of the module M between the hood 4 and the windshield 6 so as to be disposed in the front pillar 2 at the side of the second surface 2b shown in Fig. 5.

Referring to Fig. 12(c), the operator fixes the module to the rigid portion 2c of the front pillar shown in Fig. 5. Thereafter, as shown in Fig. 12(d), the first engagement portion 20c and the second engagement portion 20d of the airbag 20 shown in Fig. 3 are fixed to the vehicle body, respectively to mount the cover 11. Referring to Fig. 12(e), the pillar garnish 2d is attached to the front pillar 2 at the side of the vehicle interior.

The airbag 20, the inflator 15 and the pipe 16 are modularized into the module M, resulting in easy assembly.

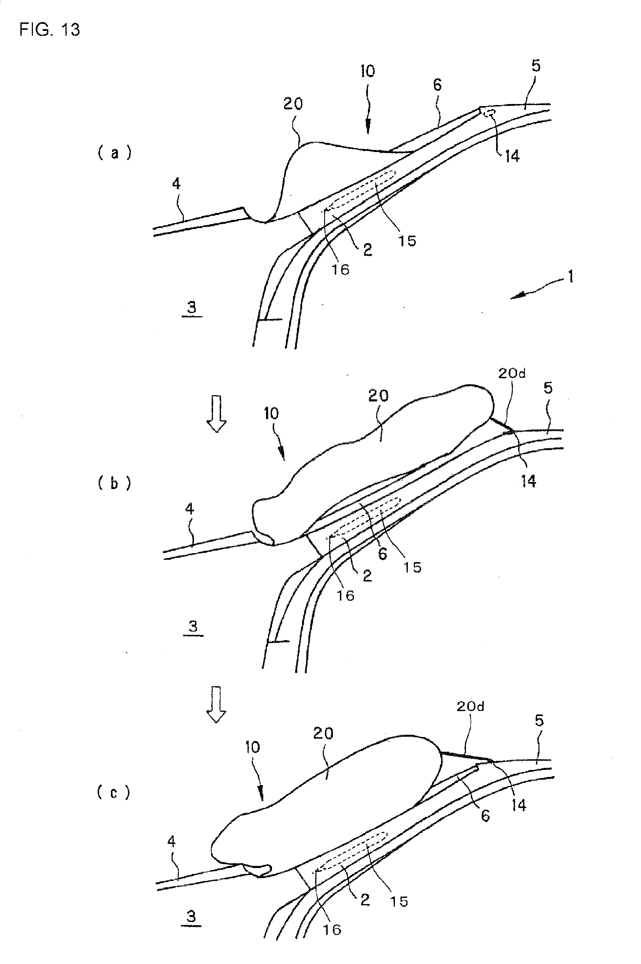

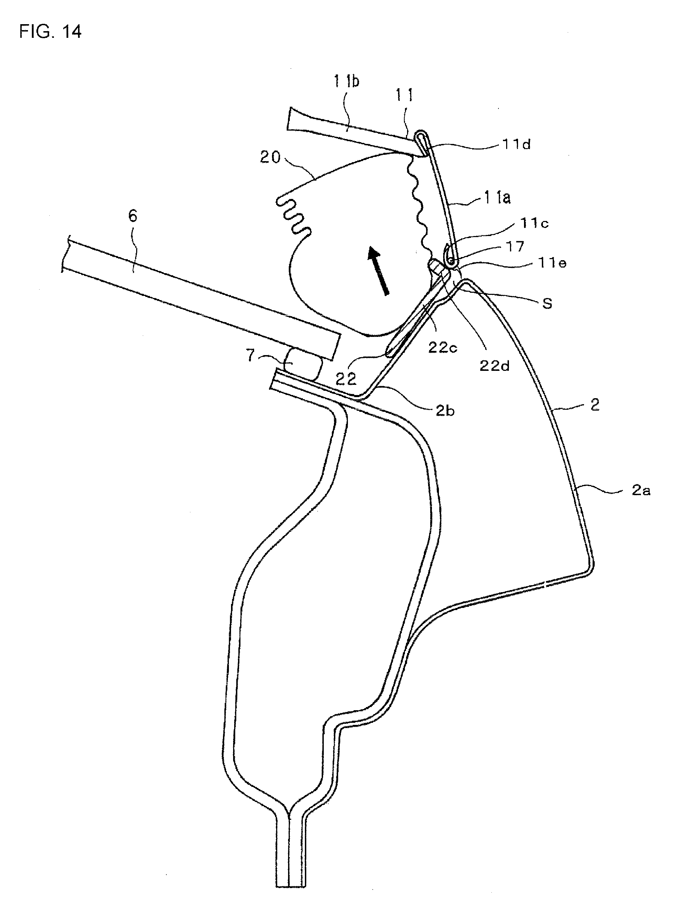

The operation of the airbag device 10 according to the example will be described. Fig. 13 shows the operation of the airbag device 10 according to the example. Fig. 14 is a sectional view of the airbag device 10 in operation.

In the case where a detection unit (not shown) detects the impact force generated in the vehicle 1 collided against the not shown subject, the airbag device 10 in the stored state as shown in Fig. 3 is activated by the control unit based on the detection signal of the detection unit.

Fig. 13(a) shows an initial stage of expansion, that is, upon activation of the airbag device 10, gas flows from the inflator 15 stored in the front pillar 2 into the airbag 20 through the pipe 16, and the airbag 20 starts expanding. In the initial stage of expansion, the airbag 20 starts expanding from the side of the fender 3 to open the cover 11 shown in Figs. 3 and 4 under the expanding pressure.

Referring to Fig. 14, the side wall guide portion 22c and the extending portion 22d of the member 22 for restricting bag expanding direction restricts the expanding direction of the airbag 20 toward the center of the vehicle. As a result, the gap S between the cover 11 and the front pillar 2 is covered to prevent the airbag 20 from projecting therefrom, thus providing the stable operation.

Fig. 13(b) shows an intermediate stage of expansion, that is, the gas flows into the airbag 20 from the inflator 15 through the pipe 16 to further expand the airbag 20. In the intermediate stage of expansion, the airbag 20 in the folded state is completely exposed outside.

Fig. 13(c) shows a final stage of expansion, that is, the airbag 20 completely expands. In the final stage of expansion, the airbag completely expands. The state of the airbag device 10 in the final stage of expansion will be described hereinafter.

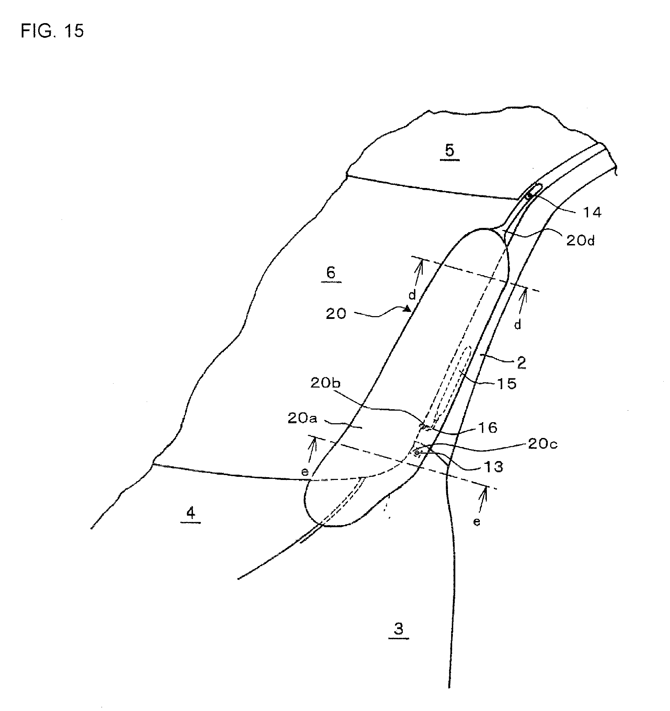

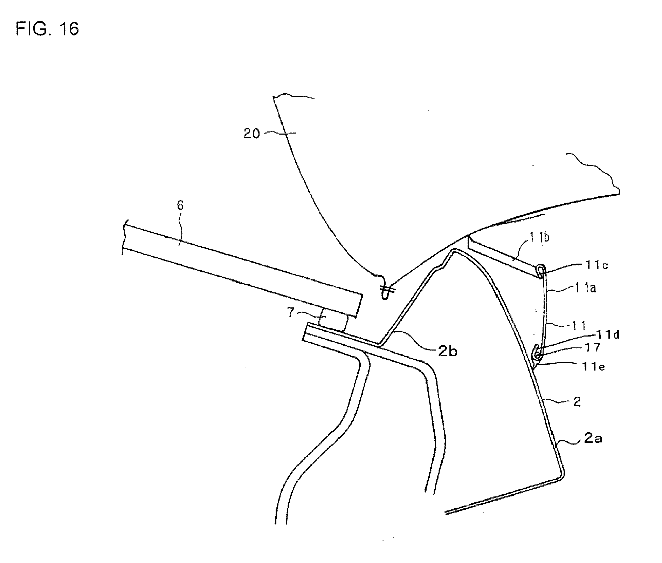

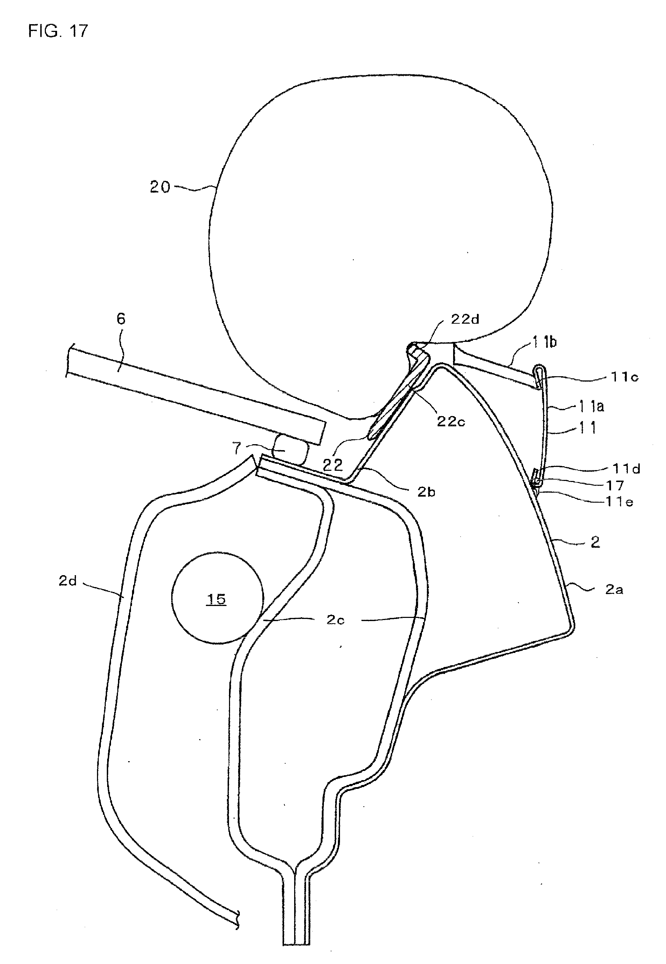

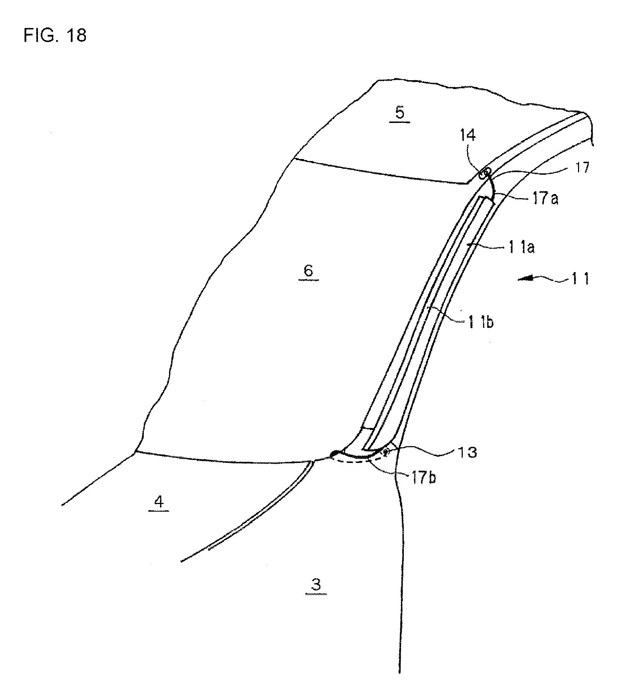

Fig. 15 is a perspective view showing the area around the front pillar 2 in the final stage of expansion. Fig. 16 is a sectional view taken along line d-d shown in Fig. 15. Fig. 17 is a sectional view taken along line e-e shown in Fig. 15. Fig. 18 is a perspective view showing the area around the front pillar 2 in the final stage of expansion having the airbag 20 omitted.

In the final stage of expansion, the airbag 20 deploys partially above the fender 3 and the hood 4 along the front pillar 2 to the front thereof.

Referring to Fig. 16, in the final stage of expansion, the cover 11 moves away from the front pillar 2 under the expanding pressure.

Referring to Fig. 17, in the final stage of expansion, the side wall guide portion 22c and the extending portion 22d of the member 22 for restricting bag expansion restrict the expanding direction of the airbag 20 to the front of the front pillar 2 and the center of the vehicle.

Referring to Fig. 18, the cover 11 engaged with the vehicle body using the cover retaining member 17 via the anchors 13, 14 is not disengaged from the vehicle 1. The cover retaining member 17 may be separated into a first cover retaining member 17a for connecting the anchor 14 to the cover 11 and a second cover retaining member 17b for connecting the anchor 13 to the cover 11.

The cover 11 connected to the vehicle 1 via the cover retaining member 17 is disengaged from the vehicle 1 upon expansion of the airbag 20. The load is unlikely to be exerted to the cover 11, thus preventing its breakage and dispersion.

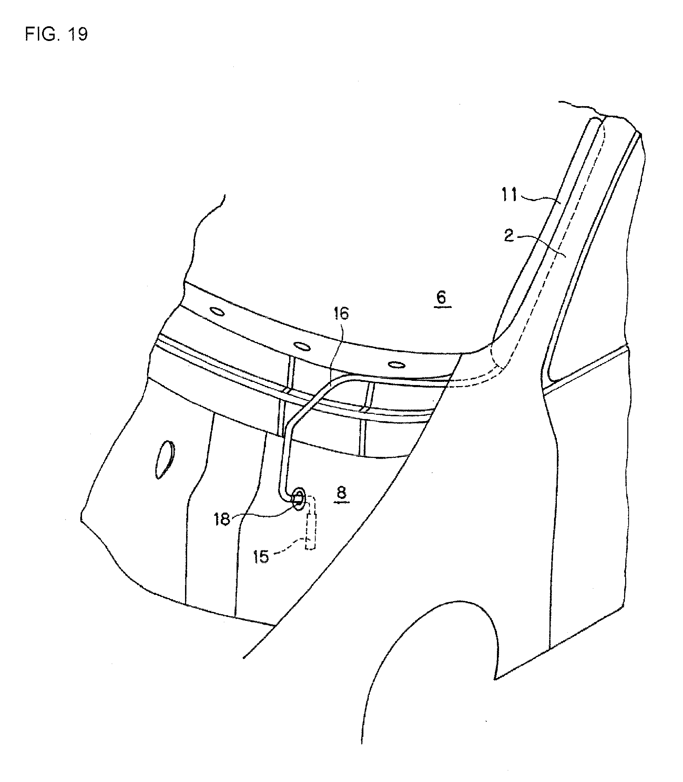

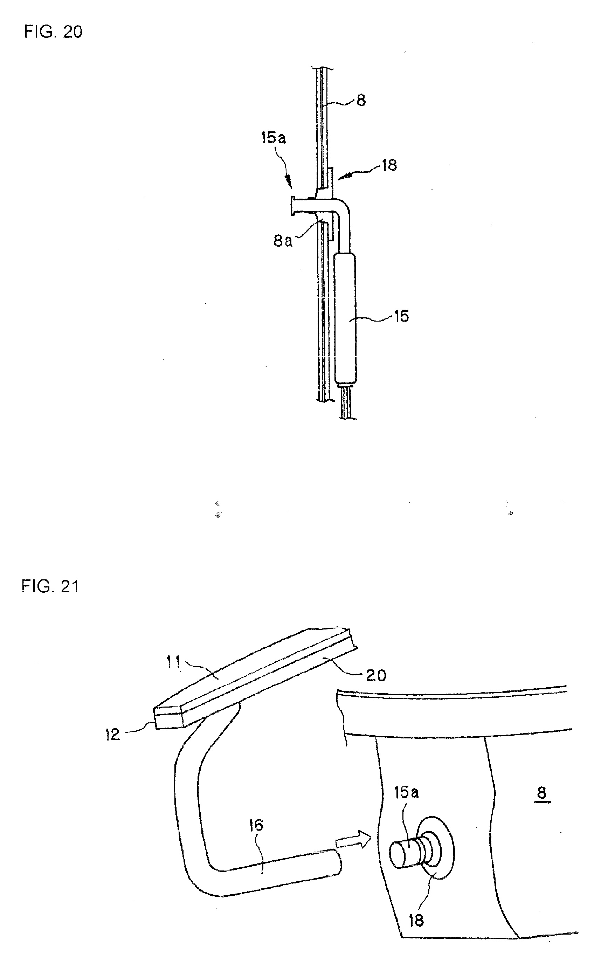

Figs. 19 to 21 show another example. Fig. 19 is a perspective view of the vehicle having the airbag device as another example installed therein. Fig. 20 is an enlarged sectional view of the portion around the inflator. Fig. 21 is a view showing a pipe joint structure.

The airbag device according to the example includes the inflator 15 in a dash panel 8 in the vehicle interior, which separates the engine room from the vehicle interior as shown in Fig. 19. Referring to Fig. 20, the inflator 15 is fixed to the dash panel 8 in the vehicle interior side while protruding a leading end of a pipe portion 15a toward the engine room from a hole 8a formed in the dash panel 8. The gap between the hole 8a of the dash panel 8 and the pipe portion 15a is sealed with a water-proof member 18 such as the packing with high water-tightness.

Referring to Fig. 21, the airbag 20, the bag case 12, and the cover 11 are connected to the inflator 15 by connecting the pipe portion 15a of the inflator 15 to the pipe 16. The pillar is mounted to the vehicle body around the airbag 20, the bag case 12 and the cover 11 in the same way as in the aforementioned example, and explanation will be omitted.

The airbag 20 is structured to expand outside the vehicle while having the inflator 15 installed in the vehicle interior without requiring high water-proof/thermal insulating property, resulting in easy arrangement of the wiring path and improved assembly work.

In the example, the front pillar 2 and the dash panel 8 are employed as the framework of the vehicle interior. However, any member may be employed so long as it forms the vehicle framework such as the roof 5 and the side frame.

The cover retaining member 17 is fixed to the anchors 13, 14 for engaging the airbag 20. However, it may be fixed to the vehicle body via any other member.

The above-structured airbag device 10 includes the airbag 20, the inflator 15 for jetting gas into the airbag 20, the pipe 16 for connecting the airbag 20 to the inflator 15, the detection unit for detecting the collision, the control unit for operating the inflator 15 in accordance with the signal from the detection unit, and the cover 11 for storing the airbag 20, and expands the airbag 20 installed along the front pillar 2 outside the vehicle. The inflator 15 is installed in a vehicle interior. The airbag 20 is structured to expand outside the vehicle while allowing the inflator 15 to be installed in the vehicle interior without requiring high water-proof/thermal insulating property. This makes it possible to improve the assembly work, for example, easy arrangement of the wiring path.

The inflator 15 is installed in the front pillar 2 in the vehicle interior. This makes it possible to improve the assembly work without requiring high water-proof/thermal insulating property, and to stabilize expansion of the airbag.

The front pillar includes the inflator inlet 2g which allows insertion of the inflator 15 from outside the vehicle so that the inflator 15 is installed in the front pillar 2 in the vehicle interior. This makes it possible to further improve the assembly work.

The inflator inlet having the pipe inserted is sealed with the water-proof member. This makes it possible to improve the water-proof/thermal insulating property with the simple structure.

In the above-structured airbag device, the airbag is structured to expand outside the vehicle while allowing the inflator to be installed in the vehicle interior without requiring high water-proof/thermal insulating property. This makes it possible to improve the assembly work, for example, easy arrangement of the wiring path, and to suppress the cost.

## Claims

1. An airbag device comprising an airbag, an inflator for jetting gas into the airbag, a pipe for connecting the airbag to the inflator, a detection unit for detecting a collision, a control unit for operating the inflator in accordance with a signal from the detection unit, and a cover for storing the airbag, which expands the airbag installed along a front pillar outside a vehicle, wherein the inflator is installed in a vehicle interior.

2. The airbag device according to Claim 1, wherein the inflator is installed in the front pillar in the vehicle interior.

3. The airbag device according to Claim 1 or 2, wherein the front pillar includes an inflator inlet which allows insertion of the inflator from outside the vehicle so that the inflator is installed in the front pillar in the vehicle interior.

4. The airbag device according to any one of Claims 1 to 3, wherein the inflator inlet having the pipe inserted is sealed with a water-proof member.
